# EUROPEAN PATENT APPLICATION

(11) **EP 2 979 739 A1**
(43) Date of publication of application: **03.02.2016**
(21) Application number: 14772897.6
(22) Date of filing: 20.01.2014
(51) Int. Cl.: B01D 24/10, B01D 27/02, C02F 1/00, C02F 1/28

(54) **FILTERING DEVICE**

(30) Priority: 28.03.2013 RU 2013114220
(71) Applicant: Electrophor, Inc., Woodmere NY 11598 (US)
(72) Inventor: SHMIDT, Jozeph Lvovich, New-York 10069 (US); KUZMIN, Alexey Leonidovich, St.Petersburg 198215 (RU); BAIGOZIN, Denis Vladislavovich, St.Petersburg 194291 (RU)
(74) Representative: Meissner, Bolte & Partner GbR
(86) International application number: PCT/RU2014/000028
(87) International publication number: WO 2014/158056

(57) **Abstract**

The invention relates to filtering devices for purifying a liquid and can be used in household conditions for additional purification of mains water and other liquids for household needs. The filtering device consists of two working zones, at least, of one fixing means at least one adjusting element. The upper working zone is configured to enable an adjustment of the hardness value of the filtered liquid throughout the service life in the form of a container with the inner cavity filled with the filtering material configured with two groups of distributors of filtered liquid flows, where the adjusting element presents a conduit arranged in the upper working zone and a valve of the fixing means which is interconnected therewith during the liquid filtration process. The technical result: a filtering device based on gravity feed is created for purifying a liquid which provides for an even softening of the filtered liquid throughout the total service life of the device while maintaining the filtering capacity thereof (1 independent and 14 dependent claims of the claims, 10 figures).

## Description

The invention relates to filtering devices for purifying liquid and can be used in household conditions for additional purification of mains water and other liquids for household needs.

As a rule known design of jig-type filtering devices for purifying liquids includes three elements: a vessel for purified water in a form of a funnel and a vessel for filtered water in the form of a jig which communicate through a filtering device. A liquid is poured in the vessel for filtered water which under gravity flows through the filtering device and collected into the vessels for filtered water. In this case, a filtering device consists of two working zones - upper zone and lower zone. The upper working zone presents a cover with the openings to inlet initial liquid and to withdraw air, and the lower zone has at least one outlet opening in the base to outlet purified liquid, and as a rule filled with a filtering material. Activated carbon is usually used as a filtering material in such filtering devices.

The following relevant sources concerning the art of the present invention are known: patent US5049272 (MΠK B01D 24/04; B01D 24/02; C02F 1/28, published 17.09.1991), patent US8216465 (MΠK B01D 27/02; C02F 1/00, published 10.07.2012), patent US8101076 (MΠK B01D 27/00; C02F 1/00, published 24.01.2012), patent RF 2262976 (MΠK B01D 24/10; C02F 1/18, published 27.10.2005), patent RF 2410330 (MΠK; C02F 1/00; B01D 27/00, published27.01.2011), patent DE4422709 (MΠK A47J31/60; B01J 47/00; B01J 47/02; C02F 1/00; C02F 1/42, published 01.04.1996).

It is known from the prior art a design of the filtering module with a screw cap with a hollow tube according to the patent Us4895648 (MΠK B01D 36/00, B01D 29/00, C02F 1/00, published 23.01.1990). Filtering module has a body and a cover or an upper working zone which consists of two stages of the conic annular part with straight vertical openings arranged in one row on the lateral surface of the lower stage for inlet of initial liquid, wherein a cover is provided with connecting part which is adapted for a cap-type attachment with a hollow tube. Attachment with a hollow tube has an internal thread to fix it on the connecting part of the cover of the filtering module. A hollow tube is intended for unimpeded outlet of air accumulating in the upper part of the filtering module, and does not influence on distribution of initial liquid in the module.

Use of the attachment with a hollow tube disposed in the center relative to the axis, and an arrangement of the holes in one row on the lateral surface of the lower step of the cover do not provide feed of part of initial liquid through this hollow tube to the module body, this does not provide uniform softening of a liquid. Furthermore, in this design means for fixing a filler is not provided which does not exclude spilling of particles of the filtering material which when filling a module with water partially emerges and is in suspended state during use.

It is known in the art a design of filtering cartridge according to the patent US59889424 (MΠK C02F 1/28, C02F 1/00, C02F 009/00, published 23.11.1999), consisting of the body with an outlet opening in the base, means for fixing of the filler disposed between a body and a cover with upper and lateral slit openings for inlet of initial liquid. Interior space of the filtering cartridge cover is filled with insoluble incompressible filtering material, for example, polypropylene fiber. Interior space of the body is filled with filtering granulated material, for example, activated carbon, wherein in order to restrain a filler from washing, insoluble incompressible filtering material, for example, polypropylene fiber, is placed on the body bottom.

During use, granulated material is sealed which leads to formation of an air gap which prevents flowing of a liquid. Thus increasing water purification time, a difference in heights of the filtering material at the edges and in the center of the module appears which leads to drop of water purification quality. Design of the filtering cartridge according to the patent US5989424 does not provide an air outlet degree sufficient for continuous filtration which is pushed out by liquid from the body when filling it with a liquid which leads to increasing filtration time of initial liquid, i.e., to decreasing filtering ability of the module. A filler of the cover is not a material which provides softening of liquid to be filtered.

It is known in the prior art a design of the device according to the patent "Filtering device" (MΠK B01D 24/10, C02F 1/18, published 13.04.2010). This invention is the most close to the present invention by technical essence and selected by us as the prototype. Device consists of the body filled with a filtering material of composition compound with an outlet opening in the base, fixing means disposed between a body and a cover which is weld together to a body by means of friction welding, where the upper part of the cover has openings for air withdrawal and lateral split openings for inlet of the initial liquid into the inner cavity of the device.

One of the drawbacks of the described invention is unsatisfactory softening of a filtered liquid. The shown configuration of the lateral cover openings is not a distributing one and provides insufficiently uniform feed of initial liquids into internal space of the cover of the filtering device.

The claimed invention is directed to improvement of the existing design according to the patent US7695615.

Known in the art jig-type filtering devices with accessory filtering modules does not provide uniform softening of a liquid throughout the total service life as when using these devices at the beginning of the service life of the module, water is characterized by hypersoftening, and in the end of the service life, water is not at all subjected to softening.

The claimed invention is directed to solving a problem connected with the increased hardness of drinking water while simultaneously purification filtered water from solved iron, mechanical suspensions and impurities. At present time, increased hardness of drinking water is the most wide-spread problem of water quality in separate regions of the planet.

The object and required technical result achieved in using the claimed invention is to create a filtering device for purification a liquid with gravity feed providing uniform softening of the filtered liquid throughout the total service life of the filtering device while simultaneously maintaining the filtering capacity thereof.

The stated object and technical result when using the invention are achieved that the filtering device consists of two working zones, at least, of one fixing means at least one adjusting element, wherein the upper working zone is configured with openings for inlet of water and withdrawal of air, and the lower working zone having not less than one outlet opening in the base is filled with the first filtering material where the upper working zone is configured to enable an adjustment of the hardness value of the filtered liquid throughout the service life in the form of a container having the inner cavity filled with the second filtering material with at least two groups of distributors of liquid flows of varied form and dimension wherein the total area of the flow distributors of the first group is greater than the total area of the flow distributors of the second group, and the adjusting element represents at least one conduit arranged in the upper working zone and a valve of the fixing means which is interconnected therewith during the liquid filtration process, where the container consists of the upper wall, lateral wall connected with the lower wall having openings and a conduit, wherein the conduit is configured to provide running of a filtered liquid through the first filtering material not interacting with the second filtering material wherein the upper working zone is connected with the lower working zone preferably by friction welding method or the upper working zone presents a removable part of the device or the upper working zone is made integral with the lower working zone, where the first group of distributors of liquid flows presents a set of the openings disposed on the upper wall and in the first upper row on the lateral wall of the container and the second group of distributors of liquid flows presents a set of the openings disposed on the lateral wall of the container lower the first row of the openings, the first filtering material preferably comprises a mixture of fiber and granulated sorbents, where as a fiber sorbent preferably ion exchanging fibers are used, and as a granulated sorbent preferably for the greater part an activated carbon, ion changing resin or their mixture are used, wherein the second filtering material preferably comprises granulated sorbents, where as a granulated sorbent preferably ion changing resin is used, where as a granulated sorbent preferably for the greater part ion changing resin and an activated carbon are used, where the density of the second filtering material is preferably less than the density of the first filtering material.

The importance of the distinguishing features of the proposed invention is as follows. In order to achieve the stated technical result, namely to receive simultaneously the purified and uniformly softened liquid throughout the whole service life of the filtering device, it is necessary to provide purification of all initial liquid put on filtration, wherein filter the greater part of this liquid through the filtering material. The constructive embodiment of the upper working zone of the device provides the calculated duration of stay and a volume of the initial liquid in the upper working zone leading to uniform softening of the filtered liquid throughout the whole service life of the filtering device, where the total area of the distributors of the first group flows is greater than the total area of the distributors of the second group flows.

Allowing for the fact that the working zone of the filtering device as in the prototype is filled with the first filtering material as which a mixture of fiber and granular materials is used, i.e. with the first filtering material; the device provides the preset mode of a liquid purification throughout the total service life. When filling a cover of the filtering device selected as a prototype (the patent US7695615) with the material softening a liquid and passing a liquid through it, an unsatisfactory operation of the valve of the fixing means is observed which is expressed in increasing the filtering time.

Set of the features of the claimed invention avoids these drawbacks thereby the claimed technical result is achieved. The essential peculiarity of the claimed filtering device is a configuration of the upper working zone of the device, which distributes a filtered liquid through the device at the expense of the conduit and the first and the second group of the flow distributors thereby provides flowing of the preset volume of a liquid filtered per unit of time.

A comparative analysis of the design of the claimed filtering device with the prototype shows that the claimed technical solution differs from the prototype and solves the stated problem.

Essence of the invention is explained in greater details in the drawings in which
Fig. 1 shows a general view of the filtering device;
Fig. 2 shows a general cross-sectional view of the filtering device performed by welding and filled with filtering materials;
Fig. 3 shows a general sectional view of the upper working zone of the filtering device in longitudinal direction;
Fig. 4 shows a general bottom view of the upper zone of the filtering device;

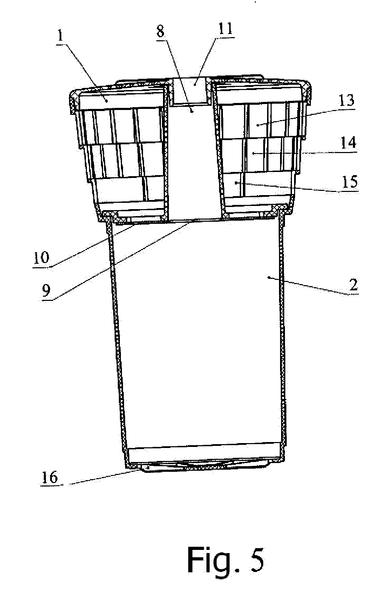

Fig. 5 shows a general cross-sectional view of the filtering device performed as a unit;
Fig. 6 shows a general top view of the filtering device;
Fig. 7 shows a general bottom view of the filtering device;
Fig. 8 shows a general view of the jig-type device for purification of a liquid with the filtering device;
Fig. 9 shows a general view of the filtering device in a special case;
Fig. 10 shows an axonometric sectional view of the filtering device.

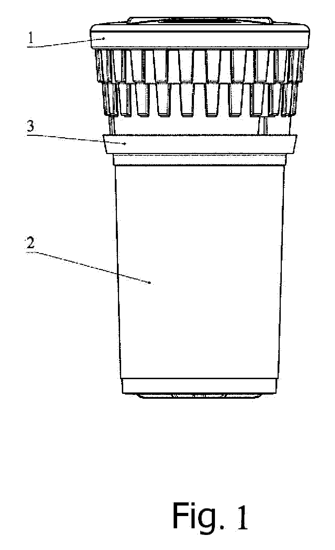

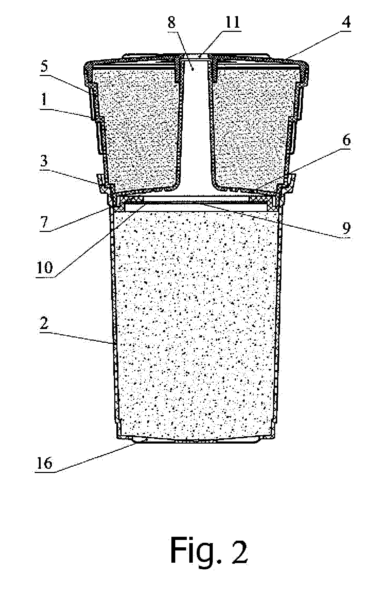

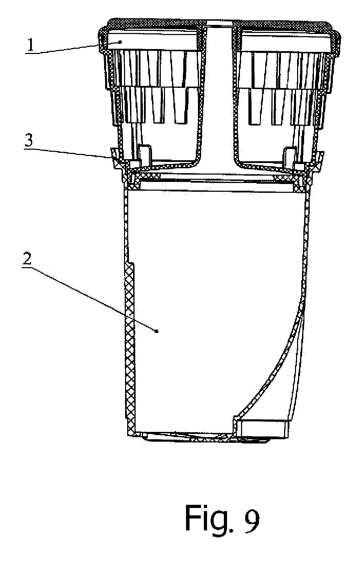

The filtering device (Fig. 1) consists of the upper working zone 1 and the lower working zone 2 wherein the device can be provided with the collar 3 for increasing security of fixing and sealing of the device in the vessel for a filtered liquid. The shape of the wall of the lower working zone is determined technologically and can have various configurations (Fig. 1, 9). The upper working zone 1 and the lower working zone 2 are connected with each other by for example friction welding (Fig. 2) or by ultrasound. In the case of ultrasound use at least one conduit can be provided in the point of connection of the working zones (not shown in fig.) through which at least a part of the initial liquid flows into the lower working zone 2 not interacting with the second filtering material.

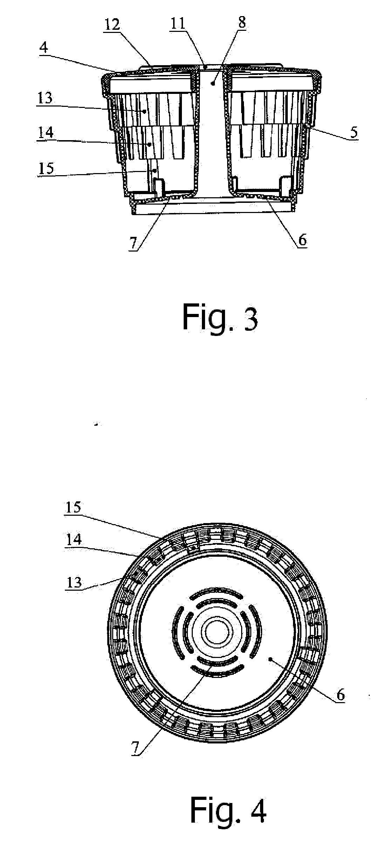

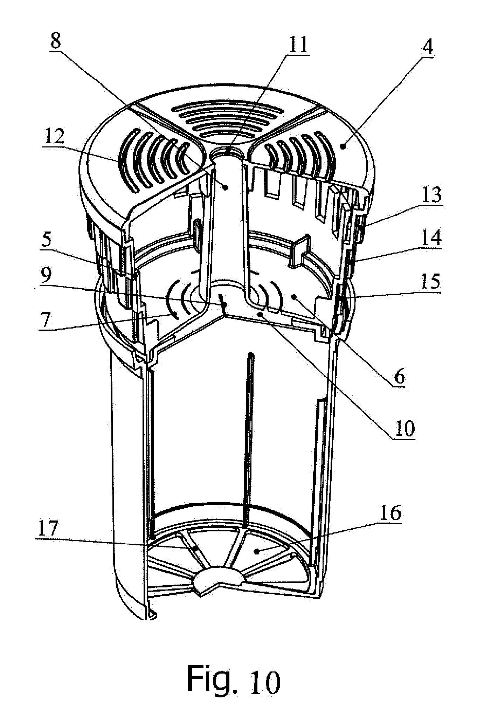

The upper working zone 1 of the filtering device is configured as a container with the upper wall 4, lateral wall 5 connected with the lower wall 6 with the openings 7 and adjusting element presenting a conduit 8 interconnected with the valve 9 of the fixing means 10 during water filtration process (Fig. 2). The outside shape of the device container 1 is determined by manufacturing methods and can present a substantially inverted step-wise shape with decreasing the diameter to its lower wall (Fig. 1) or with increasing the diameter (not shown in the fig.) or can have the constant flow section (not shown in the fig.) which does not influence on the claimed technical result if the total area of the flow distributors of the first group is more than the total area of the flow distributors of the second group. The container 1 with the lateral wall 5 connected with the lower wall 6, and the conduit 8 is made of the polymer material and is an integral one (Fig. 3). The upper wall 4 is connected to the side wall 5 of the container 1 by for example friction welding. In this case a cover has an opening 11 with a bead along the central axis of the device where the bead is connected with the conduit 8 for improving its fixing in the upper working zone 1 of the device (Fig. 2, 3). The opening 11 is intended for entering a filtered liquid into the conduit 8 and feeding a filtered liquid through this conduit into the lower working zone 2 and withdrawal of air from the lower working zone of the device. The container 1 is configured with at least two groups of the distributors of the liquid flows of various shape and dimension (Fig. 10). The first group of the flow distributors presents a set of the openings 12 disposed on the upper wall 4 and openings 13 disposed on the lateral wall 5 of the container 1 of the filtering device (Fig. 10). The second group of the flow distributors presents a set of the openings 14 and 15 disposed on the lateral wall 5 of the container 1 of the filtering device (Fig. 3, 6, 10).

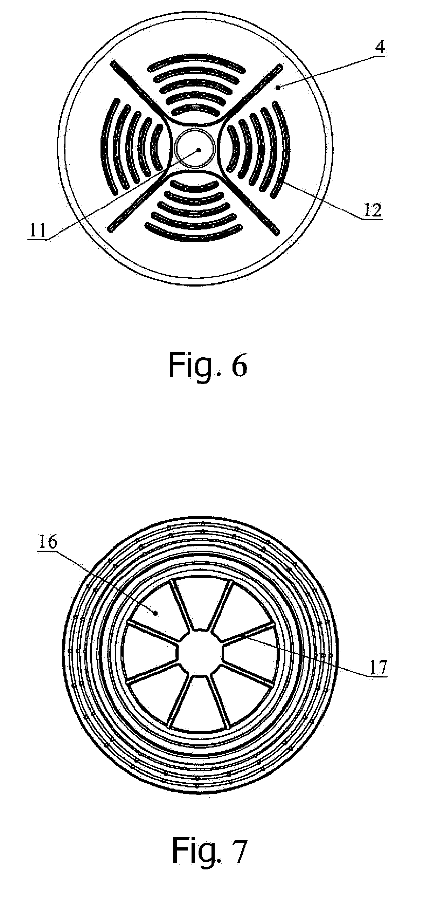

The upper wall 4 of the container 1 (Fig. 6) has for example five rows of the openings 12 for entering a filtered liquid disposed from internal and external surface of the container 1 for uniform feeding a liquid into the inner cavity of the container 1. The lateral wall 5 of the container 1 has for example three rows of the openings - the first row 13, the second row 14 and the third row 15 (Fig. 3).These openings are intended for entering of a filtered liquid, they dispose one under the other and have for example the same shape. The lower wall 6 of the container 1 has for example two rows of the openings 7 (fig. 3, 4) intended for exiting a liquid from the container 1 to the fixing means 10 with the valve 9 (Fig. 2).

The fixing means 10 is disposed between the upper working zone 1 and the lower working zone 2 of the filtering device, and at least is welded for example by friction welding to the internal surface of the lower working zone 2 (Fig. 10).

The valve 9 is provided for withdrawal of air from the lower working zone 2 into the conduit 8 during a liquid filtration process. Various openings and slits may be as the valve 9 for exiting air accumulated between the filtering material of the lower working zone 2 and the fixing means 10.

In a special case the filtering device can be configured as the integral whole.

The lower working zone 2 of the filtering device can be configured for example as a body of various shape not influencing on the technical result (Fig. 2, 9), for example, with the output openings 16 (Fig. 7) to outlet a purified liquid. These output openings 16 can be additionally provided with the stiffening ribs 17 (Fig. 7). The output openings can be made of, for example, a waterproof polymer material and function as a restraining means of the filtering material of the lower working zone 2 of the filtering device.

The particular dimensions and separate constructive parameters of the filtering device embodiment can be selected by those skilled in the art in dependence on the purpose and capacity of the device. The proposed invention can be manufactured on the machine for injection molding thermoplastic materials for example from polypropylene.

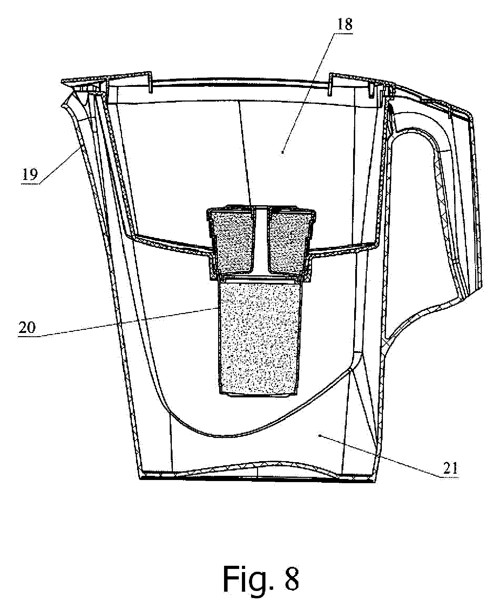

The filtering device operates as follows. Initial liquid for example, a tap water is poured into a vessel 18 for a filtered water of the jig-type filtering device for purification a liquid 19 in which the claimed device 20 is placed (Fig. 8). During the filtration process, a filtered water flows through two groups of the flow distributors, the first group - the upper openings 12 and the lateral openings 13, and the second group - the lateral openings 14 and 15 of the upper working zone 1 of the device (Fig. 3, 6, 10) with the exception of the conduit 8 disposed mainly on the center in respect to the central axis of the device (Fig. 10). As the internal volume of the filtering device is filled with a filtered liquid (Fig. 2, 8), air is superseded from the swelling filtering material of the lower working zone 2 and rises upwards where it passes from the lower working zone 2 into the upper working zone 1 through the valve 9 of the fixing means 10. The generated air passes through this valve 9 of the fixing means 10 and gets into the conduit 8 of the upper working zone 1 disposed on the center in respect to the central axis of the device. This conduit 8 provides a withdrawal of the generated air at the stage of filling the lower working zone 2 of the device with filtered water. Filling of the lower working zone 2 with filtered water is carried out faster than this liquid exits through the output openings 16 (Fig. 7). In the result of which after exit of air, the conduit 8 provides flowing of the filtered water part through this conduit 8 to the valve 9 of the fixing means 10. In this case the valve 9 is opened to the back and provides flowing of the filtered water into the lower working zone 2 of the device without interacting with the filtering material of the upper working zone 1.

Flowing of the filtered water through the filtering material of the upper working zone does not influence on the filtration speed. This is connected with the fact that the density of the second filtering material disposed in upper working zone 1 is less than the density of the first filtering material disposed in the lower working zone 2 of the filtering device. Constructive embodiment of the claimed filtering device provides a continuous filtration of a liquid and softening of the filtered water throughout the total service life of the device which is achieved at the expense of the adjusting element consisting of the valve 9 of the fixing means 10 and the conduit 8 disposed in the upper working zone 1 of the device and the first and the second groups of the flow distributors.

The higher level of the liquid in the vessel 18 for filtered water (Fig. 8) at the initial stage of filtration the more effectively and faster filtration is carried out through the filtering device. However it should be noted that at this stage of processing, for example, of water, area of contact of the filtered water with the filtering material of the upper working zone is large, and duration of the contact is low. Ion changing resin or a mixture consisting preferably for the greater part of ion changing resin and activated carbon is a filtering material of the upper working zone 1 of the device (Fig. 2), is enriched with sodium which in its structure is retained very weakly. At the same time stiffening salts are attracted to the resin and form strong bonds, a fast replacement of weak sodium by strong stiffening salts is occurred.

As a filtered water through the filtering device flowing its level in the vessel 18 (Fig. 8) is decreased for the filtered water. The next stage of the filtered water processing begins when filtered water stops coming into the conduit 8, into the openings 12 of the upper wall 4 and into the first row 13 of the openings in the lateral wall 5 of the container 1 (Fig. 2, 10). At this stage of filtered water processing, contact area of filtered water with the filtering material of the upper working zone 1 of the device decreases and duration of staying of filtered water increases. This is achieved at the expense of the second group of flow distributors, namely the first row 14 and the third row 15 of the openings in the lateral wall 5 of the container 1 (Fig. 10).

From the upper working zone 1 the softened water exits through two rows of openings 7 of the lower wall 6 of the container 1 and comes through the fixing means 10 and the valve 9 into the lower working zone 2 where final water filtration and removal from it dissolved iron and free chlorine (Fig. 2, 10). Water exits softened and filtered from various contaminations though the output openings 16 in the lower working zone 2 (Fig. 2, 7, 10). Purified water is collected into the vessels 21 for filtered water.

## Claims

1. The filtering device consists of two working zones, at least, of one fixing means at least one adjusting element, wherein the upper working zone is configured with openings for inlet of water and withdrawal of air, and the lower working zone having not less than one outlet opening in the base is filled with the first filtering material is **characterized in that** the upper working zone is configured to enable an adjustment of the hardness value of the filtered liquid throughout the service life in the form of a container with the inner cavity filled with the second filtering material with at least two groups of distributors of liquid flows of varied form and dimension wherein the total area of the flow distributors of the first group is greater than the total area of the flow distributors of the second group, and the adjusting element represents at least one conduit arranged in the upper working zone and a valve of the fixing means which is interconnected therewith during the liquid filtration process.

2. The device according to claim 1 **characterized in that** a container consists of the upper wall, lateral wall connected with the lower wall having the openings, and a conduit.

3. The device according to claim 1 **characterized in that** the conduit is configured to provide running of a filtered liquid through the first filtering material not interacting with the second filtering material.

4. The device according to claim 1 **characterized in that** the upper working zone is connected with the lower working zone preferably by friction welding method.

5. The device according to claim 1 **characterized in that** the upper working zone presents a removable part of the device.

6. The device according to claim 1 **characterized in that** the upper working zone is made integral with the lower working zone.

7. The device according to claim 1 **characterized in that** the first group of distributors of liquid flows presents a set of the openings disposed on the upper wall and in the first upper row on the lateral wall of the container.

8. The device according to claim 1 **characterized in that** the second group of distributors of liquid flows presents a set of the openings disposed on the lateral wall of the container lower the first row of the openings.

9. The device according to claim 1 **characterized in that** the first filtering material preferably comprises a mixture of fiber and granulated sorbents.

10. The device according to claim 9 **characterized in that** as a fiber sorbent preferably ion exchanging fibers are used.

11. The device according to claim 9 **characterized in that** as a granulated sorbent preferably for the greater part an activated carbon, ion changing resin or their mixture are used.

12. The device according to claim 1 **characterized in that** the second filtering material preferably comprises granulated sorbents, where as a granulated sorbents.

13. The device according to claim 12 **characterized in that** preferably ion changing resin is used.

14. The device according to claim 12 **characterized in that** as a granulated sorbent preferably for the greater part ion changing resin and an activated carbon are used.

15. The device according to claim 1 **characterized in that** the density of the second filtering material is preferably less than the density of the first filtering material.
